# EUROPEAN PATENT APPLICATION

(11) **EP 2 621 185 A1**
(43) Date of publication of application: **31.07.2013**
(21) Application number: 13150896.2
(22) Date of filing: 11.01.2013
(51) Int. Cl.: H04N 21/422, G06F 3/0482

(54) **Remote control device**

(30) Priority: 24.01.2012 JP 2012012445
(71) Applicant: Funai Electric Co., Ltd., Daito-shi Osaka 574-0013 (JP)
(72) Inventor: Nakaya, Yuichi, Daito-shi, Osaka 574-0013 (JP)
(74) Representative: Grünecker, Kinkeldey, Stockmair & Schwanhäusser

(57) **Abstract**

A touch-type remote control device includes a main microcomputer and a display device including a touch panel. When a group icon image on the display device is touch-operated by the user, the main microcomputer displays a plurality of remote control key images allocated to the touch-operated group icon image. Then, the main microcomputer grays out the group icon images excluding the touch-operated group icon image. When the user touch-operates a desired remote control key image among the remote control key images, the main microcomputer determines that the remote control key image located in the touch-operated position has been selected and executes a control command corresponding to the remote control key image.

## Description

### BACKGROUND OF THE INVENTION

### 1. Field of the Invention

The present invention relates to a remote control device including a touch panel.

### 2. Description of the Related Art

Touch panel-type remote control devices (hereinafter referred to as touch-type remote control devices) have been known in recent years. Remote control key images corresponding to control commands for controlling household electrical appliances are displayed on the display of a touch-type remote control device. The user can perform various types of operations by touching a remote control key image displayed on the display device.

Incidentally, household electrical appliances have been multi-functionalized progressively in recent years. With the multi-functionalization of household electrical appliances, the number of control commands has also been increasing, so it is necessary to display many remote control key images on the display device of a touch-type remote control device.

In response to this, touch-type remote control devices have been known to display many remote control key images on the display device by reducing the display sizes of the remote control key images. However, with these touch-type remote control devices, the user must touch a small remote control key image, so the visibility of the remote control key images is poor, and a problem arises in that the user often performs a so-called misoperation in which the user ends up touching a remote control key image other than the desired one.

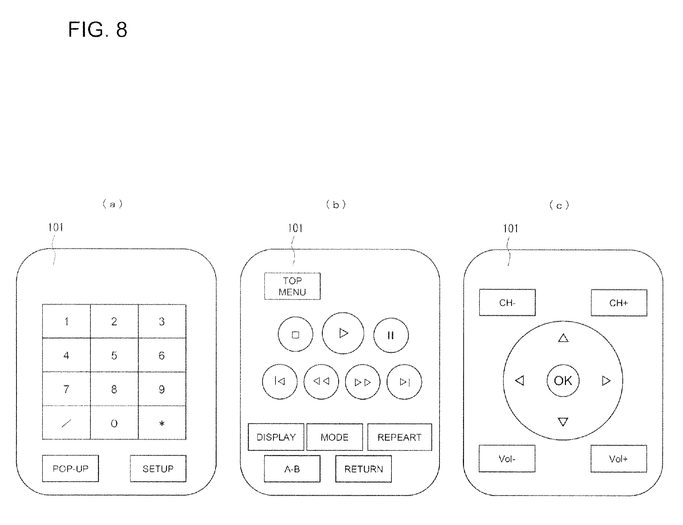

To counter the aforementioned problem, touch-type remote control devices have been known in which remote control key images are divided and displayed on a plurality of screens, and the number of remote control key images displayed on a single screen is reduced, thus increasing the display sizes of the remote control key images on one screen. Each of FIGS. 8A-8C shows the display device 101 of a touch-type remote control device in which remote control key images are divided and displayed on a plurality of screens. As is shown in FIGS. 8A-8C, in this touch-type remote control device, a plurality of remote control key images are displayed by using three screens of the display device 101. However, in this touch-type remote control device, the user must look for a desired remote control key image from among the plurality of screens, so there is a problem in that the operability of the remote control key images is poor.

Furthermore, Japanese Patent Application Laid-Open Publication No. 2011-210083 discloses a display device including a control unit in which the coordinates of each of arrangement points disposed around the contact coordinates are calculated, the distance from each of a plurality of input icons to each of the arrangement points is calculated, and each of the input icons is displayed at the arrangement point having a combination which is such that the distance from the input icon to the arrangement point is the smallest, whereby this display device reduces the amount of movement of the line of sight of the operator for looking for an icon and the actions of the finger, hand, or the like performing an input operation. However, with this display device, when a plurality of remote control key images are displayed, it is impossible to improve the visibility of the remote control key images for the user.

Moreover, Japanese Patent Application Laid-open Publication No. 2011-107804 discloses an information processing device which is such that when contact between specific softkeys is detected, at least some of the softkeys other than the specific softkeys are not displayed, thus preventing the inputting of objects indicated by the softkeys for which it is determined that the user has little intention to touch them. However, with this information processing device as well, when a plurality of remote control key images are displayed, the visibility of the remote control key images for the user cannot be improved.

In addition, Japanese Patent Application Laid-open Publication No. 2007-295584 discloses a digital broadcast receiver in which an operation image for a touch operation according to an operating button of a remote controller is displayed on a display device based on information regarding the operating buttons of the remote controller contained in digital broadcast, and when a touch operation of the operation image is detected by the touch panel, the same action as the operating button of the remote controller is carried out corresponding to the operation image on which this touch operation is detected. However, with this information processing device as well, when a plurality of remote control key images are displayed, it is impossible to improve the visibility of the remote control key images for the user.

### SUMMARY OF THE INVENTION

In order to solve the aforementioned problems, preferred embodiments of the present invention provide a remote control device which is such that when the user operates a desired remote control key image by touch among a plurality of remote control key images, the visibility of the remote control key images is improved, thus preventing a misoperation of the remote control key images and also making it possible for the user to easily find the desired remote control key image.

A remote control device according to a preferred embodiment of the present invention is a remote control device including a display device that displays various types of images; a touch panel arranged so as to cover the screen of the display device and which detects a touch operation by the user; an image display controller arranged and programmed to display on the display device a plurality of remote control key images corresponding to a control command to control external equipment; a selection determination unit that determines that, when the touch panel is touch-operated by the user, the remote control key image located in the touched position has been selected; and a transmission unit that transmits to the external equipment a control command corresponding to the remote control key image that has been determined by the selection determination unit as having been selected by the user, wherein the image display controller displays on a single screen of the display device a plurality of group icon images to each of which a plurality of the remote control key images are allocated, and when one of these group icon images is touch-operated by the user, the image display controller displays on the display device the plurality of remote control key images allocated to the touch-operated group icon image.

In a preferred of the present invention, when one of the group icon images is touch-operated by the user, the image display controller preferably displays the plurality of remote control key images allocated to the touch-operated group icon image around the touch-operated group icon image.

In a preferred embodiment of the present invention, when one of the group icon images is touch-operated by the user, the image display controller preferably displays the group icon images other than the touch-operated group icon image in a grayed-out manner so as to be unselectable.

In a preferred embodiment of the present invention, when one of the group icon images is touch-operated by the user, and the touched position is then slid, the selection determination unit preferably determines that the remote control key image positioned in the direction of sliding of the touched position has been selected from among the plurality of remote control key images allocated to this touch-operated group icon image.

With a preferred embodiment of the present invention, a plurality of group icon images are displayed on a single screen, and when a group icon image is touch-operated by the user, a plurality of remote control key images allocated to the touch-operated group icon image are displayed. Therefore, it is not necessary for the user to look for a desired remote control key image among the plurality of remote control key images displayed on a plurality of screens. Accordingly, the user can easily find the desired remote control key image.

Furthermore, because only the remote control key images allocated to the touch-operated group icon image are displayed on the display device, the number of remote control key images displayed on a single screen can be reduced. Accordingly, the display sizes of the remote control key images can be increased, so the visibility of the remote control key images by the user is improved, thus making it possible for the user to easily find the desired remote control key image. Moreover, because the sizes of the remote control key images can be increased, it is also possible to prevent a so-called misoperation in which the user ends up touch operating an image other than the desired remote control key image.

The above and other elements, features, steps, characteristics and advantages of the present invention will become more apparent from the following detailed description of the preferred embodiments with reference to the attached drawings.

### BRIEF DESCRIPTION OF THE DRAWINGS

FIG. 1 is a perspective view of a touch-type remote control device according to a preferred embodiment of the present invention.

FIG. 2 is a block diagram showing the internal configuration of the touch-type remote control device according to a preferred embodiment of the present invention.

FIG. 3 is an explanatory diagram showing group icon images displayed on the display device of the touch-type remote control device according to a preferred embodiment of the present invention.

FIG. 4 is a flow chart showing the procedure for control processing by the main microcomputer of the touch-type remote control device according to a preferred embodiment of the present invention.

FIG. 5 is an explanatory diagram showing the display of remote control key images when a group icon image of the touch-type remote control device is operated by touch according to a preferred embodiment of the present invention.

FIG. 6 is an explanatory diagram showing an example of the display of remote control key images when a group icon image in a modified example of the touch-type remote control device is operated by touch according to a preferred embodiment of the present invention.

FIG. 7 is an explanatory diagram showing an example of the display of remote control key images when a group icon image in another modified example of the touch-type remote control device is operated by touch according to a preferred embodiment of the present invention.

FIGS. 8A-8C are explanatory diagrams showing remote control key images displayed on a conventional touch-type remote control device.

### DETAILED DESCRIPTION OF THE PREFERRED EMBODIMENTS

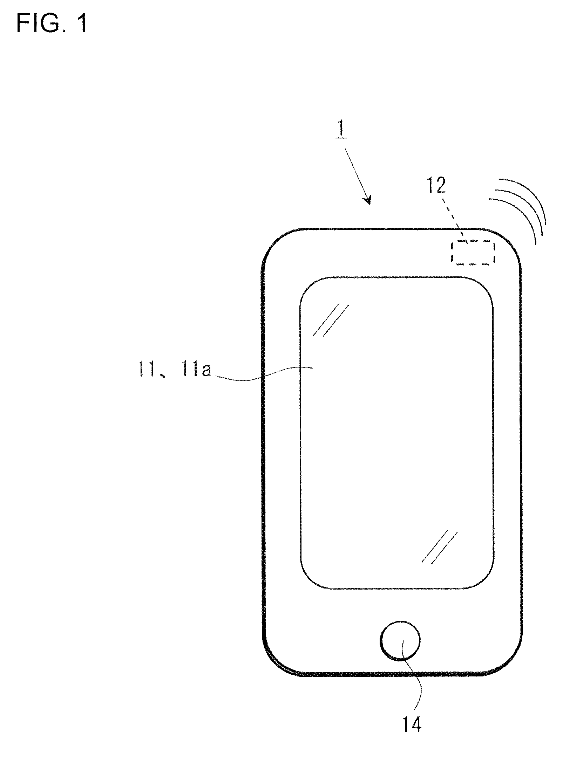

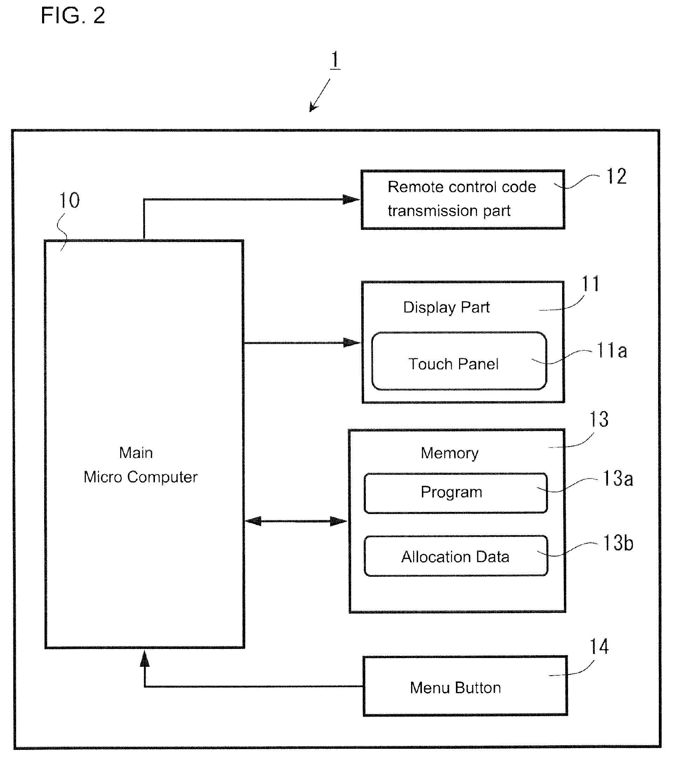

The touch panel-type remote control device (hereinafter referred to as "touch-type remote control device"; "remote control device" in the claims) according to a preferred embodiment of the present invention will be described below with reference to FIGS. 1 and 2. FIG. 1 shows the external appearance of a touch-type remote control device 1, and FIG 2 shows the electrical block configuration of the touch-type remote control device 1.

The touch-type remote control device 1 is a device which controls audio video (AV) equipment (external equipment) including television (hereinafter referred to as TV) receivers and Blu-ray recorders by transmitting remote control codes in accordance with touch operations by the user.

The touch-type remote control device 1 includes a display device 11 that displays various types of images, a remote control code transmission unit 12 that transmits remote control codes to AV equipment, a memory 13, a menu button 14, and a main microcomputer (image display controller, selection determination unit) 10.

The display device 11 includes a touch panel 11a that functions as operation keys. The touch panel 11a is arranged so as to cover the screen of the display device 11 and detects touch operations by the user. Remote control key images corresponding to control commands to control AV equipment and group icon images to which a plurality of remote control key images are allocated are displayed on the display device 11. The user performs various types of operations by touching a group icon image and a remote control key image.

The remote control code transmission unit 12 transmits a control command corresponding to a remote control key image that is touch-operated by the user to the AV equipment by using a radio frequency (RF) signal. In concrete terms, when the remote control key image for "replay" is touch-operated by the user, for example, the remote control code transmission unit 12 transmits a remote control code (control command) to indicate "replay" to the AV equipment by using an RF signal.

The memory 13 stores a program 13a that controls the touch-type remote control device 1 and allocation data 13b. Information about a plurality of remote control key images allocated to each group icon image is stored in the allocation data 13b.

The menu button 14 is a button that is operated by the user and used to indicate the display of a menu screen on the display device 11.

The main microcomputer 10 performs control in accordance with the operation by the user such that a remote control code is transmitted to the AV equipment by using the remote control code transmission unit 12. Furthermore, the main microcomputer 10 also controls the display of group icon images and remote control key images displayed on the display device 11 in accordance with the content of the allocation data 13b. Moreover, the main microcomputer 10 determines that, when the touch panel 11a is touch-operated by the user, the group icon image or remote control key image located in the touched position has been selected.

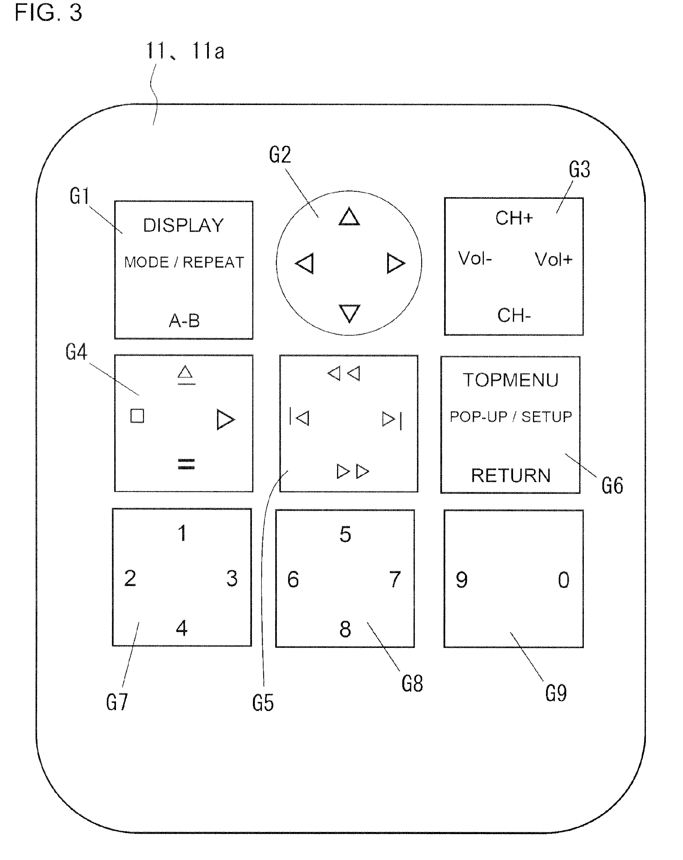

Next, the screen displayed on the display device 11 will be described with reference to FIG. 3. Group icon images G1 through G9 to each of which a plurality of remote control key images are allocated are displayed on one screen of the display device 11. The names of the allocated remote control key images are displayed in each of the group icon images G1 through G9. For example, the respective remote control key images for "1," "2," "3," and "4" are allocated to the group icon image G7, so the group icon image G7 displays the four numbers, "1," "2," "3," and "4."

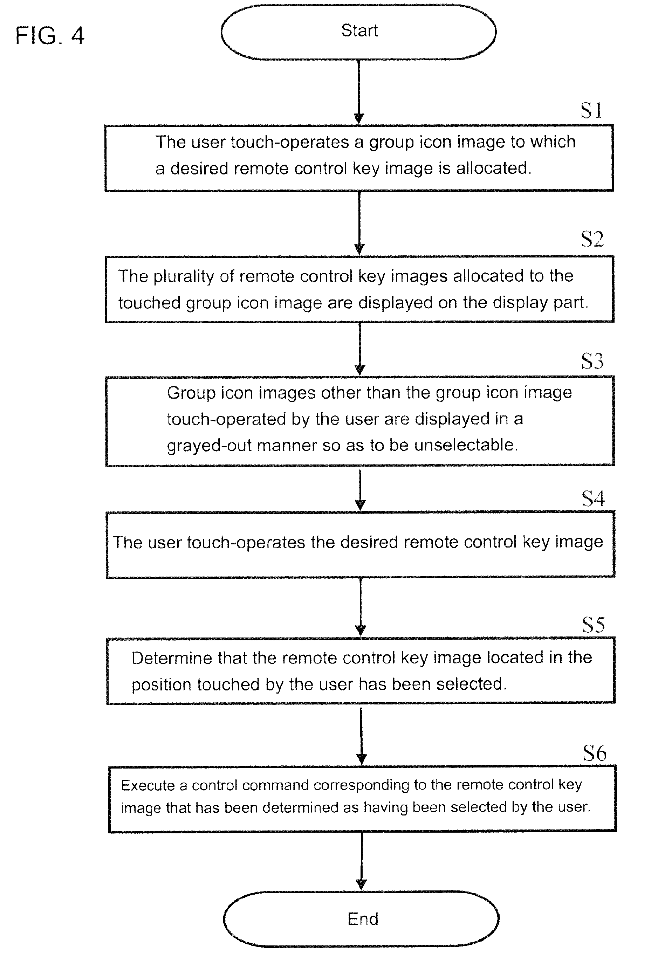

Next, the control processing of the main microcomputer 10 when the user selects a remote control key image will be described with reference to the flowchart shown in FIG. 4. Here, it is assumed that the group icon images G1 through G9 shown in FIG. 3 are already displayed on the display device 11.

When one of the group icon images G1 through G9 to which a desired remote control key image is allocated is touch-operated by the user (S1), the main microcomputer 10 displays on the display device 11 the plurality of remote control key images allocated to the touch-operated one of the group icon images G1 through G9 (S2). Then, the main microcomputer 10 displays in a grayed-out manner the group icon images other than the group icon image that was touch-operated in the step S1 so as to be unselectable (S3).

Then, when the user touch-operates the desired remote control key image among the remote control key images displayed in the step S2 (S4), the main microcomputer 10 determines that the remote control key image located in the position operated by the user's touch has been selected (S5) and executes the control command corresponding to this remote control key image (S6).

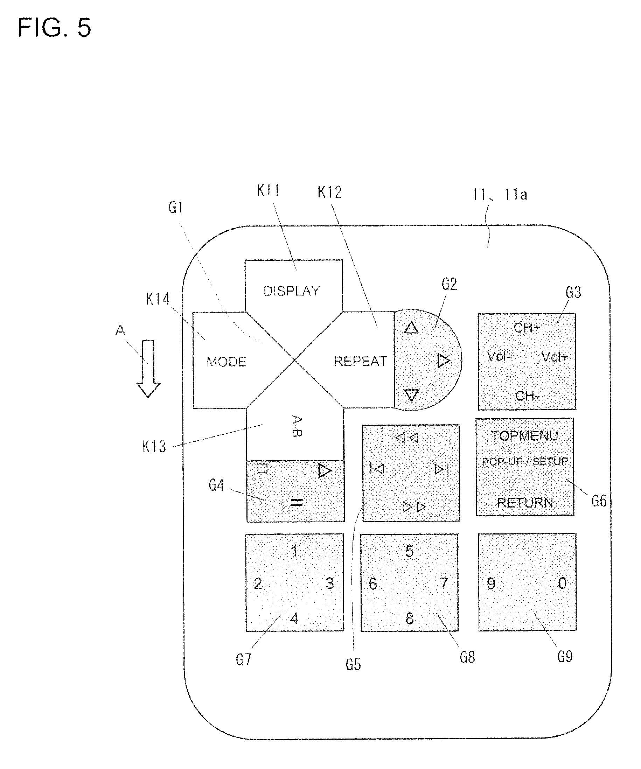

Next, the remote control key images displayed on the display device 11 will be described with reference to FIG. 5. Here, it is assumed that the group icon image G1 shown in the FIG. 3 has been touch-operated.

The main microcomputer 10 displays a plurality of remote control key images K11 through K14 allocated to the group icon image G1 that has been touch-operated by the user around the touch-operated group icon image G1 (corresponding to step S2 in the FIG. 4). At this point, the main microcomputer 10 displays in a grayed-out manner the group icon images G2 through G9 excluding the group icon image G1 that has been touch-operated by the user such that these group icon images G2 through G9 cannot be selected (corresponding to step S3 in FIG. 4).

Next, the processing to determine the remote control key image that is selected by the user will be described in detail with reference to the FIG. 5. Here, it is assumed that the group icon image G1 has already been touch-operated by the user and that the group icon images K11 through K14 allocated to the group icon image G1 are displayed on the display device 11.

When the group icon image G1 is touch-operated by the user, and the touched position is then slid (corresponding to step S4 in FIG. 4), the main microcomputer 10 determines that one of the remote control key images K11 through K14 located in the direction of sliding of the touched position has been selected from among the plurality of remote control key images K11 through K14 allocated to the touch-operated group icon image G1 (corresponding to step S5 in the FIG. 4).

In concrete terms, in cases where the user slides a finger in the direction of the outlined arrow A in FIG. 5 after the user's finger touch-operates the group icon image G1 to display the plurality of remote control key images K11 through K14 (corresponding to step S4 in the FIG. 4), for example, the main microcomputer 10 determines that the remote control key image K13 has been selected by the user (corresponding to step S5 in the FIG. 4). Then, the main microcomputer 10 executes the control command "A-B" corresponding to the remote control key image K13 (corresponding to step S6 in the FIG. 4).

As was described above, with the touch-type remote control device 1 according to the present preferred embodiment, when the plurality of group icon images G1 through G9 are displayed on one screen of the display device 11 and one of the group icon images G1 through G9 is touch-operated by the user, the plurality of remote control key images allocated to the touch-operated one of the group icon images G1 through G9 are displayed. Therefore, there is no need for the user to look for the desired remote control key image from among the plurality of remote control key images displayed on a plurality of screens. Accordingly, the user can find the desired remote control key image easily.

In addition, because only the remote control key images allocated to the touch-operated one of the group icon images G1 through G9 are displayed on a single screen of the display device 11, the number of the remote control key images displayed on one screen can be reduced. Accordingly, the display sizes of the remote control key images can be increased, so the visibility of the remote control key images for the user is improved, which makes it easy for the user to find the desired remote control key image. Furthermore, because the sizes of the remote control key images can be increased, it is also possible to prevent a so-called misoperation in which the user ends up touch operating an image other than the desired remote control key image.

Moreover, in the touch-type remote control device 1, the plurality of remote control key images allocated to one of the group icon images G1 through G9 that has been touch-operated by the user are displayed around the touch-operated one of the group icon images G1 through G9. As a result, the only thing that the user needs to do is to search among the remote control key images displayed around the touched one of the group icon images G1 through G9, so the operability and visibility of the remote control key images are improved, thus making it possible to prevent a misoperation of the remote control key images.

In addition, the touch-type remote control device 1 is devised such that the group icon images G1 through G9 other than the one of the group icon images G1 through G9 touch-operated by the user are displayed in a grayed-out manner and therefore cannot be selected. As a result, the visibility of the remote control key images is improved, so it is possible to prevent a misoperation of the remote control key images by the user.

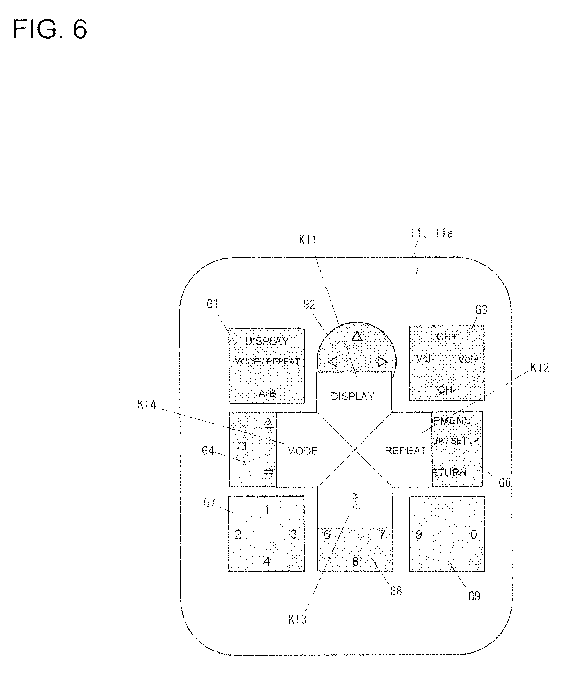

Next, a modified example of the aforementioned touch-type remote control device 1 will be described with reference to FIG. 6. FIG. 6 shows the display of the remote control key images K11 through K14 when the group icon image G1 shown in the FIG. 3 is touch-operated by the user.

When the group icon image G1 is touch-operated by the user, the main microcomputer 10 displays the plurality of remote control key images K11 through K 14 allocated to the group icon image G1 in the center of the screen of the display device 11 as shown in FIG. 6.

Thus, in the touch-type remote control device 1 in this modified example, the visibility of the remote control key images K11 through K14 can be further improved compared to the display of the remote control key images shown in FIG. 5, so a misoperation of the remote control key images K11 through K14 can be prevented more reliably.

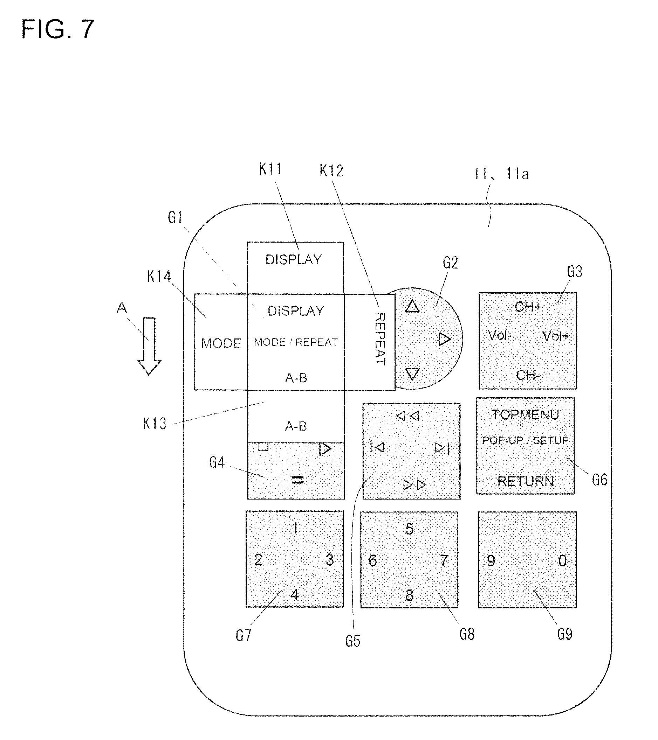

Next, another modified example of the touch-type remote control device 1 will be described with reference to FIG 7. FIG. 7 shows the display of the remote control key images K11 through K14 when the group icon image G1 shown in FIG. 3 is touch-operated by the user.

When the group icon image G1 is touch-operated by the user, the main microcomputer 10 displays the plurality of remote control key images K11 through K 14 allocated to the group icon image G1 so as to surround the group icon image G1 as shown in FIG. 7.

Thus, in the touch-type remote control device 1 in this modified example, unlike the display of the remote control key images shown in FIG. 5, when the group icon image G1 is touch-operated, the touched group icon image G1 and the remote control key images K11 through K14 can be simultaneously displayed on the screen of the display device 11, so a misoperation of the remote control key images K11 through K14 can be prevented more reliably.

Note that the present invention is not limited to the configuration of the preferred embodiments described above, and various modifications are possible within the scope that does not alter the gist of the present invention. For instance, in the above-described preferred embodiments, an example was shown in which group icon images other than the group icon image that has been touch-operated by the user are displayed in a grayed-out manner and therefore cannot be selected, but it would also be possible to implement controls such that the user can select the grayed-out group icon images.

While preferred embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. A remote control device comprising:
a display device that displays various types of images;
a touch panel that is arranged to cover a screen of the display device and detects a touch operation by a user;
an image display controller arranged and programmed to display on the display device a plurality of remote control key images corresponding to a control command to control external equipment;
a selection determination unit that determines that, when the touch panel is touch-operated by the user, the remote control key image located in a touched position on the display device has been selected; and
a transmission unit that transmits to the external equipment a control command corresponding to the remote control key image that has been determined by the selection determination unit as having been selected by the user; wherein
the image display controller displays on a single screen of the display device a plurality of group icon images to each of which a plurality of the remote control key images are allocated, and when one of the group icon images is touch-operated by the user, the image display controller displays on the display device the plurality of remote control key images allocated to a touch-operated group icon image.

2. The remote control device according to claim 1, wherein when one of the group icon images is touch-operated by the user, the image display controller displays on the display device the plurality of remote control key images allocated to the touch-operated group icon image around the touch-operated group icon image.

3. The remote control device according to claim 1, wherein when one of the group icon images is touch-operated by the user, the image display controller displays on the display device the group icon images other than the touch-operated group icon image in a grayed-out manner so as to be unselectable.

4. The remote control device according to claim 1, wherein when one of the group icon images is touch-operated by the user, and the touched position is then slid, the selection determination unit determines that the remote control key image positioned in the direction of sliding of the touched position has been selected from among the plurality of remote control key images allocated to the touch-operated group icon image.
